# FASCICULE DE BREVET EUROPEEN

(11) **EP 3 020 692 B1**
(45) Date de publication et mention de la délivrance du brevet: **18.04.2018**
(21) Numéro de dépôt: 15306753.3
(22) Date de dépôt: 05.11.2015
(51) Int. Cl.: C04B 40/00, C04B 28/26, C04B 12/04, C04B 28/00, C04B 111/00

(54) **LIANT DE GÉOSYNTHÈSE COMPRENANT UN ACTIVATEUR ALCALINO-CALCIQUE ET UN COMPOSÉ SILICO-ALUMINEUX**
GEOSYNTHESE-BINDEMITTEL, DAS EINEN ALKALI-KALK-AKTIVATOR UND EINE SILIZIUM-ALUMINIUM-VERBINDUNG UMFASST
GEOSYNTHSESIS BINDER COMPRISING A CALCIUM- ALKALINE ACTIVATOR AND A SILICO-ALUMINOUS COMPOUND

(30) Priorité: 13.11.2014 FR 1460954
(43) Date de publication de la demande: 18.05.2016
(73) Titulaire: COLAS, 92100 Boulogne-Billancourt (FR)
(72) Inventeur: LE GOUIL, Cédric, 91220 Brétigny-sur-Orge (FR); LEROY, Arnaud, 78720 Senlisse (FR)
(74) Mandataire: Jacobacci Coralis Harle

(56) Documents cités:
- EP-A1- 0 545 827
- WO-A1-2007/109862
- WO-A1-2014/067721
- WO-A2-2010/085537
- FR-A1- 2 453 837
- FR-A1- 2 571 734
- FR-A1- 2 741 630
- JP-A- H06 330 037
- JP-A- H10 168 451
- US-A1- 2005 160 946
- DATABASE WPI Week 198340 3 mars 1983 (1983-03-03) Thomson Scientific, London, GB; AN 1983-780597 XP002742318, & JP S58 145654 A (TAKI KAGAKU KK) 30 août 1983 (1983-08-30) & JP S58 145654 A (TAKI CHEMICAL) 30 août 1983 (1983-08-30)
- METSO J ET AL: "Activation of Blast Furnace Slag by Some Inorganic Materials", PROCEEDINGS OF .THE CANMET/ACI INTERNATIONAL CONFERENCE ON THE USE OF FLY ASH, SILICA FUME, SLAG AND OTHER MINERAL BY-PRODUCTS IN CONCRETE MONTEBELLO, JULY 31 - AUG. 5, 1983<PUBATTR/>,, 31 juillet 1983 (1983-07-31), XP001277703,

## Description

### DOMAINE TECHNIQUE AUQUEL SE RAPPORTE L'INVENTION

La présente invention se rapporte aux matériaux de construction utilisés dans le domaine des infrastructures de transport (routes et voies ferrées), des remblais et des ouvrages supports de bâtiments et de génie civil, ces ouvrages, remblais et infrastructures étant nommés ci-après « ouvrages».

En particulier, la présente invention concerne une composition sèche de liant de géosynthèse à base d'un activateur alcalin et d'un composé silico-alumineux destiné par exemple aux traitements des sols et des matériaux granulaires. L'invention porte également sur un matériau comprenant ledit liant de géosynthèse et éventuellement des granulats.

La présente invention a également trait au procédé de fabrication de la composition sèche de liant de géosynthèse, ainsi qu'à un procédé de fabrication du matériau susmentionné.

### ARRIERE-PLAN TECHNOLOGIQUE

Le traitement des sols et des matériaux granulaires avec un ou plusieurs liants hydrauliques est une technique qui consiste à incorporer, au sein de ces matériaux, ce ou ces éléments d'apport en présence d'eau (naturelle et/ou d'apport) et de les mélanger plus ou moins intimement *in situ* ou au sein d'une installation industrielle, jusqu'à l'obtention d'un matériau relativement « homogène » pour lui conférer des propriétés nouvelles.

Il s'agit d'un traitement qui utilise les affinités chimiques des matériaux et du liant et qui permet d'améliorer le simple traitement mécanique, comme le compactage.

Le traitement des matériaux pour l'exécution des remblais, couches de forme, et assises destinées à la réalisation des infrastructures de transport a pour objet de rendre utilisable un matériau qui ne présente pas les caractéristiques initiales requises sans modification de ses paramètres intrinsèques.

Il a plusieurs raisons d'être :
- pour améliorer des sols trop humides, qu'il s'agisse du sol en place pour permettre la progression du chantier ou de sols à réutiliser en remblai ;
- pour réaliser des plates-formes rigides et stables aux intempéries pour la circulation de chantier et la mise en oeuvre d'une couche de fondation d'une chaussée ;
- ou encore pour constituer à partir de ces sols des remblais structurels, couches de fondation ou de base « d'ouvrages », tout en présentant de préférence des performances améliorées sur le long terme.

Actuellement, les liants sont à base de chaux et/ou de liants hydrauliques produits par l'industrie cimentière. Ces liants sont principalement à base de clinker, de laitiers, de cendres volantes ou encore de pouzzolanes activés par de la chaux ou un composé sulfo-calcique.

On connaît par exemple dans l'état de la technique, le document JPH 10 168451 qui décrit un coulis pour traiter un sol qui contenant pour 1 m³: (a) un agent améliorant le durcissement sous forme liquide qui comprend : un laitier en granulés (50 - 500 kg), un composé calcium poudreux comme de la chaux vive, de la chaux hydratée ou encore du gypse (10-300 kg), un agent fluidifiant pour ciment (0,1 à 5 kg), et (b) un composant liquide comprenant notamment : une silice colloïdale (5-150kg) et un composé choisi notamment parmi le carbonate de sodium, le carbonate de potassium (10-200 kg), et (c) le complément en eau.

Le mécanisme de prise de ces liants hydrauliques est basé sur la dissolution des composés minéraux et leur cristallisation dans le milieu aqueux. Les cristaux produits créent des liaisons entre les éléments de sols ou granulaires.

Ces techniques de traitement des sols et des matériaux granulaires aux liants hydrauliques sont bien connues et codifiées. Les liants font l'objet de normes et de guides. Leur usage est largement répandu en France et dans de nombreux pays du monde.

En effet, ils s'appliquent à froid et présentent de nombreux avantages techniques et économiques. Ils permettent en effet de minimiser considérablement les extractions de granulats naturels. Cette diminution pouvant aller jusqu'à l'absence totale d'emploi de matériaux de carrière lorsque les conditions de traitement du sol en place sont favorables. La diminution de l'emploi de matériaux de carrière permet conséquemment de diminuer les opérations de transport pour la construction des « ouvrages », ainsi que la gêne aux usagers des infrastructures de transports et aux riverains des chantiers.

Cependant il arrive que le résultat escompté ne soit pas obtenu, voire que des désordres (gonflements) apparaissent et obligent à une reprise de l'ensemble d'un ouvrage.

Les désordres trouvent, par exemple, leur origine dans la cristallisation d'espèces sulfatées secondaires comme l'ettringite ou la thaumasite. Leur cristallisation est le résultat d'une chaîne de réaction qui met en oeuvre le plus souvent du gypse ou des sulfures naturellement présents dans de nombreux sols en présence d'eau.

En particulier, l'ettringite a la propriété de gonfler en présence d'eau: il a été observé que la variation du volume du minéral était de l'ordre de 30 %. Lorsque l'ettringite se forme dans un sol ou dans un matériau d'apport, celui-ci est rendu beaucoup moins stable : il y a ainsi des risques de gonflements dus au support pouvant parfois conduire à des éboulements et/ou des glissements de terrain. S'il s'agit d'un sol traité et/ou de matériaux d'apport pour la construction « d'ouvrages » ; ils peuvent alors présenter des fissures, crevasses et/ou des dénivellations préjudiciables à l'exploitation de ces « ouvrages ». Par exemple, un sol comprenant environ 2 % en masse de sulfates est en général gonflant à moyen ou long terme par formation d'ettringite.

Egalement, la présence de matières organiques, telles que des acides humiques ou fulviques, dans les sols/matériaux à traiter peuvent inhiber la prise des liants actuels.

Lorsque de tels sols ou granulats sont rencontrés, il est préférable de les identifier avant d'engager les travaux et de recourir à d'autres techniques de construction. Il est même parfois nécessaire d'éliminer les sols en place et de les substituer par des sols ou matériaux d'apport, pour la réalisation des remblais et de couches de forme. Ce type de solution est coûteux et augmente fortement l'impact sur l'environnement.

La mise au point des techniques de traitement de ces sols et granulats impropres aux traitements aux liants hydrauliques classiques a été recherchée, de façon à rendre possible leur emploi dans la construction routière.

Différentes solutions ont ainsi été proposées à ce jour.

Le document FR 2 741 630 décrit notamment un procédé pour traiter un sol gonflant sur lequel est ajouté un mélange de chaux éteinte, d'hydroxyde d'aluminium et/ou d'un liant choisi parmi les laitiers, les pouzzolanes, les cendres volantes et les fumées de silice.

Cependant, ce procédé présente l'inconvénient de ne pas apporter de résistance mécanique suffisante et présente un coût de traitement trop élevé.

Le document WO 2010/085537 décrit un liant composite géopolymère pour béton ou ciment comprenant un mélange sec de liant et un activateur alcalin liquide. En particulier, le mélange sec peut comprendre : (i) au moins un matériau de cendre volante ayant 15 % en poids ou moins d'oxyde de calcium; (ii) au moins un agent améliorant la gélification, (iii) au moins un agent améliorant le durcissement ayant une composition différente d'une composition du ou des matériaux de cendre volante et (iv) éventuellement un régulateur de prise. Dans ce document, l'activateur alcalin liquide est une solution aqueuse d'hydroxyde de métal et de silicate de métal, comme un silicate de métal alcalin (Na₂SiO₃) ou une solution d'hydroxyde de métal et de silice fumée. Cependant, la composition de liant composite décrite dans ce document présente l'inconvénient d'être corrosif et dangereux à utiliser.

Le document JP S58 145654 décrit une composition durcissable utilisable en tant que matériau de construction comprenant un laitier hydraulique, du gypse, de la chaux, un hydrate d'alumine actif, et éventuellement du méthylcellulose. Il est indiqué que l'hydrate d'alumine actif peut être de l'hydroxyde d'aluminium actif ou un gel d'alumine frais qui est le produit de la réaction entre une substance alcaline et un sel d'aluminium soluble dans l'eau. Toutefois, cette composition durcissable nécessite un coût de traitement trop élevé.

Le document WO 2007/109862 divulgue une composition sèche de ciment comprenant un matériau aluminosilicate multi-phase alcalin apte à fournir une source d'alcalin et un silicate soluble. En particulier, le matériau aluminosilicate multi-phase alcalin (a) est formé par activation chimique (élévation température) ou mécanique (i) d'un matériau aluminosilicate en présence (ii) d'un matériau alcalin. Dans les exemples, le matériau aluminosilicate multi-phase alcalin est activé par de la soude (NaOH), de la potasse (KOH) et/ou du carbonate de sodium. Par conséquent, le matériau aluminosilicate décrit dans ce document présente divers inconvénients : il requiert tout d'abord une activation chimique (activation thermique) ou une activation mécanique, puis il nécessite l'emploi de produits dangereux (soude).

Le document US 2005/160946 se réfère à des matériaux à base de ciment et en particulier à l'utilisation de mélange comprenant des scories d'acier inoxydable et un liant géopolymère comme substituant total ou partiel de ciment dans une composition de béton. En particulier, le matériau cimentaire peut comprendre : en tant que liant géopolymère, un silicate d'aluminium issu par exemple de cendres volantes, et un activateur (bromure de calcium, oxyde de calcium, etc).

Le document FR2 839 970 décrit un liant ou ciment géopolymèrique constitué d'une matrice vitreuse amorphe enrobant des particules de mellilite, des particules d'alumino-silicates et des particules de quartz, ces particules ayant un diamètre moyen inférieur à 50 microns. La matrice vitreuse amorphe est constituée par un composé géopolymère de type Poly(sialatedisiloxo), de formule approchée (Na,K,Ca)(-Si-O-Al-O-Si-O-Si-O), ou (Na,K,Ca)-PSDS.

Pour obtenir ce liant ou ciment géopolymèrique, on fait durcir un mélange réactionnel contenant : a) une roche résiduelle de type granit fortement altéré dans laquelle la kaolinisation est très avancée; b) un verre de mellilite de calcium dans lequel la partie verre est supérieure à 70% en masse par rapport à sa masse totale et c) un silicate alcalin soluble dans lequel le rapport molaire (Na,K)₂O:SiO₂ est compris entre 0,5 et 0,8.

Toutefois, ce liant ou ciment géopolymèrique présente l'inconvénient d'être assez corrosif et dangereux à utiliser. En outre, cette solution est coûteuse et les matières premières utilisées ne jouissent pas d'une forte disponibilité.

Bien que les liants de l'art antérieur aient permis des avancées, leur développement est extrêmement limité ou nul à cause des inconvénients mentionnés ci-dessus, apportant donc plus de contraintes que de bénéfices. A ce jour, la règle générale est de ne pas traiter les sols et matériaux granulaires contenant des sulfates au-delà d'un certain pourcentage : 0,7 % est le seuil le plus couramment retenu.

Il existe donc toujours un besoin pour de nouvelles compositions de liant qui permettent de traiter des sols et/ou des matériaux granulaires contenant en particulier du soufre, tout en empêchant, de préférence, les effets secondaires rédhibitoires dus à leur emploi, tels que la formation d'ettringite ou de thaumasite.

Le but de la présente invention est ainsi de proposer une nouvelle composition sèche de liant évitant au moins en partie les inconvénients précités.

### OBJET DE L'INVENTION

Afin de remédier à l'inconvénient précité de l'état de la technique, la présente invention propose une composition sèche de liant de géosynthèse, comprenant au moins :
- un activateur alcalino-calcique comportant au moins de la chaux, telle que de la chaux hydratée et un sel alcalin qui sont aptes à réagir ensemble pour former *in situ* une base, de préférence une base forte, en présence d'eau, et
- un composé silico-alumineux comprenant une teneur en oxyde de calcium supérieure ou égale à 15%, en masse, par rapport à la masse totale dudit composé silico-alumineux,
caractérisée en ce que la composition sèche de liant comprend, en masse, par rapport à sa masse totale, de 45 à 95 % dudit composé silico-alumineux, de 2 à 25 % de chaux et de 3 à 30 % de sel alcalin.

Il est à noter que, selon l'invention, les proportions de CaO qui peuvent être issues de la chaux de l'activateur alcalino-calcique ne sont pas comprises dans les proportions de CaO qui peuvent être présentes dans le composé silico-alumineux.

Dans le cadre de la présente invention, on entend par «liant de géosynthèse », un liant géopolysynthétique résultant d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

Par composition « sèche », on entend une composition sous forme anhydre, à savoir ne comprenant de l'eau qu'à l'état de traces, soit par exemple à une teneur massique inférieure ou égale à 5% par rapport à la masse totale de la composition.

Pour le reste de la description, à moins qu'il n'en soit spécifié autrement, l'indication d'un intervalle de valeurs « de X à Y » ou « entre X et Y », dans la présente invention, s'entend comme incluant les valeurs X et Y.

La composition sèche de liant de géosynthèse peut présenter également les caractéristiques suivantes prises individuellement ou selon toutes les combinaisons techniquement possibles:
- ledit composé silico-alumineux peut comprendre une teneur en oxyde de calcium supérieure ou égale à 25%, en masse, par rapport à la masse totale dudit composé silico-alumineux ;
- ledit composé silico-alumineux peut comprendre, en masse, par rapport à sa masse totale, au moins : de 25 à 55% d'oxyde de calcium (CaO), de 3 à 25% d'alumine (Al₂O₃) et de 20 à 50 % de SiO₂;
- ledit composé silico-alumineux peut comprendre, en masse, par rapport à sa masse totale, au moins : de 35 à 45% d'oxyde de calcium (CaO), de 5 à 15% d'alumine (Al₂O₃) et de 30 à 45 % de SiO₂;
- le ratio molaire Si/Al dudit composé silico alumineux varie de 0,1 à 6, de préférence de 1 à 4 ;
- la composition de liant peut comprendre, en masse, par rapport à la masse totale de ladite composition de liant, de 65 à 85% dudit composé silico-alumineux, de 5 à 20 % de chaux, de préférence hydratée, et de 10 à 25 % de sel alcalin ;
- le sel alcalin de l'activateur alcalino-calcique peut être du carbonate de potassium, du carbonate de sodium, du silicate de potassium, du silicate de sodium ou un de leurs mélanges ;
- la composition sèche de liant peut comprendre, en outre une source de sulfates ;
- la composition sèche de liant ne nécessite pas d'étape d'activation chimique et/ou mécanique. En particulier, la composition sèche de liant selon l'invention ne nécessite pas d'activation thermique.

La présente invention concerne également un matériau comprenant un sol, un granulat ou leur mélange, ledit sol, ledit granulat ou leur mélange comportant éventuellement une source de sulfates, caractérisé en ce qu'il comprend en outre de l'eau et une composition sèche de liant de géosynthèse, telle que décrite ci-dessus.

Par « sol, granulat ou leur mélange comportant une source sulfaté », on entend un sol, granulat ou leur mélange comprenant des sulfates à un seuil par exemple supérieur ou égal à 0,5 %, de préférence supérieur ou égal à 0,7 %, en masse, par rapport à la masse totale du sol et/ou granulat.

Dans le cadre de la présente invention, un sol peut-être défini selon la norme NF P 11-300 « classification de matériaux utilisables dans la construction des remblais et des couches de forme d'infrastructures routières ». Cette norme permet de classer les sols en fonction d'un certain nombre de paramètres :
- Classe A - sols fins,
- Classe B - sols sableux et graveleux avec fines,
- Classe C - sols comportant des fines et des gros éléments,
- Classe D - sols insensibles à l'eau.

A titre d'exemple, le sol peut être majoritairement composé de graves, de marnes, d'argiles ou encore de limons.

Également, selon l'invention, un granulat peut correspondre à des granulats naturels, artificiels ou recyclés répondant notamment à la norme NF P 18-545 et est généralement composé de sables, de gravillons, de fillers, de sablons (sables à grains très fins), de poussières ou d'un mélange de ces constituants.

En particulier, la composition sèche de liant représente de 1 à 30 %, de préférence de 2 à 20 %, en masse, par rapport à la masse totale du matériau.

En outre, dans le matériau est présente une fraction de sulfates, sulfures ou autres éléments soufrés dans une proportion de 0,7 à 20 %, en masse, par rapport à la masse totale du matériau.

L'invention a également trait à un procédé de préparation d'une composition sèche de liant de géosynthèse telle que décrite ci-dessus, comprenant au moins l'étape suivante : le mélange pendant une durée de 0,5 minutes à 15 minutes, dans un malaxeur à pulvérulent : d'un activateur alcalino-calcique comportant de la chaux et un sel alcalin, avec un composé silico-alumineux comprenant une teneur en oxyde de calcium supérieure ou égale à 15 %, en masse, par rapport à la masse totale dudit composé silico-alumineux.

Enfin, l'invention porte également sur un procédé de préparation d'un matériau tel que défini ci-dessus, comprenant une composition sèche de liant de géosynthèse telle que décrite ci-dessus et comprenant au moins les étapes suivantes :
(i) la préparation d'une composition sèche de liant telle que définie ci-dessus ;
(ii) la préparation d'un sol ou d'un granulat ou leur mélange comportant éventuellement une source de sulfates;
(iii) l'épandage de la composition sèche de liant sur le sol et/ou le granulat de l'étape (ii) ;
(iv) le malaxage du sol et/ou du granulat obtenu(s) à l'étape (iii) ;
(v) éventuellement un ajout d'eau de gâchage lors de l'étape (iii) et/ou pendant et/ou après l'étape de malaxage (iv) de la composition sèche de liant avec le sol et/ou le granulat, de sorte à obtenir ledit matériau.

Cet ajout d'eau est fonction de l'eau contenue et mesurée au préalable dans le sol et/ou le granulat.

En particulier, les étapes (iii) et (iv), voire les étapes (iii) à (v), peuvent être remplacées par une fabrication en centrale, de façon continue ou discontinue, de sorte à obtenir ledit matériau qui sera apte à être mis en oeuvre sur un chantier.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est un graphique qui montre la résistance en compression directe Rc en fonction du temps en jours d'un sol B5 comprenant en masse par rapport à la masse totale du matériau soit 5 %, soit 8 % d'un liant selon l'invention ; et
- la figure 2 est un graphique qui montre l'évolution entre 7 et 28 jours de la résistance en compression indirecte Rᵢₜ, ainsi que le module d'élasticité du sol B5 de la figure 1 traité avec 5 % de liant selon l'invention.

La société Demanderesse s'est attachée au développement de nouvelles compositions de liant adaptées aux exigences des professionnels des « ouvrages » (comme les ouvrages en béton pour le bâtiment et les traitement de sols, des granulats pour les infrastructures de transport, etc.), à savoir permettant d'améliorer les résistances mécaniques et notamment les résistances en compression directes ou indirectes de matériau dans lequel ils sont incorporés, tout en réduisant notamment les émissions de CO₂ des liants actuels. Elle s'est également attachée au développement de nouvelles compositions de liants destinées à traiter les sols ou les granulats problématiques, tels que les sols contenant des sulfates ou encore des sols riches en matières organiques.

A cet effet, la présente invention concerne une composition sèche de liant de géosynthèse comprenant au moins :
- un activateur alcalino-calcique comportant au moins (a) de la chaux, telle que de la chaux hydratée et (b) un sel alcalin, tel que du carbonate de sodium ou de potassium, ladite chaux (a) et ledit sel alcalin (b) étant aptes à réagir ensemble pour former *in situ* une base, de préférence une base forte (KOH, NaOH, etc.) en présence d'eau et
- (c) un composé silico-alumineux, comprenant une teneur en oxyde de calcium supérieure ou égale à 15%, en masse, par rapport à la masse totale dudit composé silico-alumineux,
caractérisée en ce que la composition sèche de liant comprend, en masse, par rapport à sa masse totale, de 45 à 95 % dudit composé silico-alumineux, de 2 à 25 % de chaux et de 3 à 30 % de sel alcalin.

De par ces caractéristiques et en particulier la combinaison du couple activateur alcalino-calcique et composé silico-alumineux spécifique, la composition sèche de liant selon l'invention, présente de nombreux avantages.

Elle permet de traiter des sols en place et/ou des granulats et en particulier des sols et/ou des granulats présentant une teneur relativement élevée en sulfates (par exemple au-delà de 0,7 % en masse) pour la réalisation de remblais ou de couches de forme qui soient stables, homogènes et durables, tout en présentant des caractéristiques mécaniques comparables, par exemple, à celles d'une grave-ciment ou d'une grave traitée au liant hydraulique.

La Demanderesse a notamment découvert, de manière surprenante, que l'association d'un activateur alcalino-calcique (comme de la chaux hydratée avec un sel alcalin, par exemple du carbonate de sodium ou de potassium), et d'un composé silico-alumineux comprenant un minimum d'oxyde de calcium permettait d'améliorer la résistance à la compression, et ainsi les propriétés mécaniques d'un sol ou d'un granulat dans lequel il est additionné.

En effet, comme le montre les résultats des essais expérimentaux illustrés dans la présente demande, la composition sèche de liant de géosynthèse selon l'invention améliore, dans certains cas, de plus de 85 % la résistance à la compression par rapport à d'autres compositions de liant testées (cf. : tableau 7).

En outre, la composition assure une bonne répartition des charges sur le support, grâce à la rigidité du matériau ou de la nouvelle structure ainsi obtenu(e).

Egalement, grâce à cette caractéristique, la composition selon l'invention assure un bon comportement par temps chaud sans déformation, et un bon comportement vis-à-vis des cycles de gel-dégel.

De plus, le traitement de sols en place grâce à la composition selon l'invention possède une facilité d'adaptation aux contraintes d'exploitation.

La composition sèche de liant selon l'invention est peu onéreuse et facile à mettre en oeuvre (forte disponibilité des composés de l'invention).

Sans être liée par une quelconque théorie, il semblerait que la composition ainsi définie conduirait à une prise chimique qui ferait participer abondamment les différents éléments qui seraient nécessaires à la formation d'ettringite ou de thaumasite secondaire, responsables des désordres précédemment mentionnés. Notamment cette composition permettrait de consommer les ions sulfates, aluminium et calcium solubles dans l'eau présents à la fois dans le liant, mais aussi potentiellement dans le sol ou le matériau granulaire à traiter.

En outre, la composition sèche de liant de géosynthèse selon l'invention présente l'avantage de limiter très fortement les impacts H.S.E. (Hygiène, Sécurité, Environnement) sur les personnels d'application. La chaux hydratée et le sel alcalin, comme le carbonate de sodium, activés par l'eau, permet de former un activateur alcalin par formation *in situ* d'une base, généralement d'une base forte, telle que de la soude, qui va « s'attaquer » au composé silico-alumineux particulier de l'invention, ainsi qu'aux éventuels autres composés silico-alumineux (argiles, etc) contenus dans le sol/granulat traité. Ceci aurait pour effet de renforcer les propriétés mécaniques du matériau traité.

Enfin, la composition selon l'invention présente l'avantage d'utiliser un activateur alcalin également favorable vis-à-vis des contraintes HSE. En effet l'activation alcaline, de type sodique ou potassique, est réalisée dans le matériau contenant le liant après introduction de l'eau d'apport. La base se forme *in situ* dans le matériau traité et n'est donc pas en contact direct avec l'utilisateur.

Tel qu'indiqué précédemment, le liant selon l'invention comprend un activateur alcalino-calcique, comprenant (a) de la chaux comme de la chaux hydratée (Ca(OH)₂) et (b) un sel alcalin.

Cette chaux (a), qui peut être hydratée, éteinte ou vive (a), peut en particulier présenter une teneur en masse par rapport à la masse totale de la chaux d'au moins 50 %, de préférence de 50 à 99,9 % de Ca(OH)₂. Une plage de valeurs entre 50 et 99,9 % inclut notamment les valeurs suivantes : 50, 55, 60, 65, 70, 75, 80, 85, 90, 95, 96, 97, 98, 99. En général, la chaux hydratée sera préférée.

La chaux (a) se présente en général sous forme de poudre.

En particulier, au moins 50 %, de préférence de 50 à 99 %, et notamment au moins 90% de la chaux hydratée (a) peut passer à travers un tamis de 200 µm, voire de 90 µm. Egalement, une plage de valeur entre 50 et 99% inclut notamment les valeurs suivantes : 50, 55, 60, 65, 70, 75, 80, 85, 90, 95, 96, 97, 98, 99.

A titre d'exemple, le diamètre maximum (Dₘₐₓ) est inférieur ou égal à 2000 µm, voire inférieur ou égal à 200 µm.

Il peut présenter une surface spécifique Blaine supérieure ou égale à 3000 cm²/g, de préférence entre 15000 et 20000 cm²/g.

Le liant comporte également (b) un sel alcalin.

Un sel alcalin selon l'invention peut être choisi parmi : du carbonate de sodium (Na₂CO₃), du carbonate de potassium (K₂CO₃), du silicate de sodium (Na₂SiO₃) ou du silicate de potassium (K₂O₅Si₂) ou un de leurs mélanges.

En général, le sel alcalin (b) présente un taux de pureté supérieur ou égal à 80 % et de préférence supérieur ou égal à 95 % et est employé sous forme de poudre. Le diamètre moyen des grains de sel alcalin est en général inférieur à 1000 µm.

En particulier, le composé silico alumineux (c) comprend une teneur en oxyde de calcium supérieure ou égale à 15%, en masse, par rapport à la masse totale dudit composé silico-alumineux.

Une teneur en oxyde de calcium supérieure ou égale à 15 %, signifie une teneur en oxyde de calcium supérieure ou égale à 15 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, 40 %, 41 %, 42 %, 43 %, 44 %, 45 %, 46 %, 47 %, 48 %, 49 %, 50 %, 51 %, 52 %, 53 %, 54 %, 55 %, 58 %, 60 %, 63 %, 65 %, 68 %, 70 %, ou tout intervalle situé entre ces valeurs.

En général, ledit composé silico alumineux (c) comprend au moins, en masse, par rapport à la masse totale du composé silico-alumineux : de 25 à 55 % d'oxyde de calcium (CaO), de 3 à 25 % d'alumine (Al₂O₃) et de 20 à 50 % de SiO₂.

Selon un mode de réalisation, ledit composé silico-alumineux (c) comprend au moins, en masse, par rapport à la masse totale du composé silico-alumineux : de 35 à 45% d'oxyde de calcium (CaO), de 5 à 15 % d'alumine (Al₂O₃) et de 30 à 45 % de SiO₂. Le composé silico-alumineux particulier de l'invention peut comprendre en outre des traces d'oxyde de titane ou d'alcalino-terreux comme MgO, Fe₂0₃, TiO₂, SO₃, Na₂O ou encore K₂O.

Le pourcentage de silice réactive peut par exemple être supérieur ou égal à 15 % en masse, de préférence entre 15 et 50 % et de manière encore plus préférée de 25 à 45 % en masse ; tandis que le pourcentage d'alumine réactive peut-être par exemple supérieur ou égal à 2 % en masse, de préférence de 2 à 25 % en masse et idéalement de 5 à 15 % en masse, par rapport à la masse totale du composé silico-alumineux. En outre, la valeur CEC (cmol(+)/kg) peut varier notamment de 2 à 25, de préférence de 5 à 15.

Généralement, le ratio molaire Si/Al du composé silico-alumineux selon l'invention varie de 0,1 à 6, de préférence de 1 à 4 ou de tout intervalle situé entre ces valeurs.

Le composé silico-alumineux (c) selon l'invention se présente, en général, sous forme de poudre. En particulier, au moins 50 %, de préférence de 50 à 99 %, et notamment au moins 90 % du composé silico-alumineux peut passer à travers un tamis de 32 µm. A titre d'exemple, le diamètre médian (D₅₀) peut aller de 2 à 50 µm, de préférence de 2 à 20 µm et en particulier de 5 à 15 µm.

Il peut présenter une surface spécifique Blaine supérieure ou égale à 2000 cm²/g, de préférence entre 2000 et 6000 cm²/g et en particulier entre 4000 et 5000 cm²/g.

Le liant selon l'invention peut également comprendre (d) une source sulfatée, comme des sulfates de calcium (gypse (CaSO₄²⁻)) ou de magnésium, notamment si le sol et/ou les granulats à traiter n'en contiennent pas suffisamment. La teneur, en masse, de cette source sulfatée, par rapport à la masse totale du liant peut varier de 10 à 30 %, de préférence de 15 à 20 %.

Cet ajout d'une source sulfatée permet de conforter la prise, le durcissement et la tenue à l'eau de la composition sèche de liant. La source sulfatée peut être également intégrée au liant sous forme pulvérulente.

La composition sèche de liant selon l'invention peut éventuellement comprendre en outre des additifs, destinés à contrôler la cinétique de prise (accélérateurs ou retardateurs de prises). Ces additifs sont bien connus de l'homme du métier.

Pour que la composition sèche de liant puisse agir (à savoir, que la réaction se produise), il est nécessaire que le liant soit en contact avec de l'eau (catalyseur). La teneur en eau peut être déterminée classiquement au moyen de l'essai Proctor et pourra être déterminée par un homme du métier. Suivant la nature du matériau à traiter et son mode de mise en oeuvre, le taux de gâchage optimal pourra varier, par exemple, entre 1 et 50 % et en particulier entre 5 et 25 %. La teneur en eau peut être également déterminée classiquement au moyen de tout autre essai connu de l'homme du métier et qui sera plus adapté au matériau à traiter tel que l'essai d'affaissement au cône d'Abrams utilisé dans les bétons.

La chaux (a) et le sel alcalin (b), par exemple de sodium ou de potassium vont ainsi former *in situ,* avec l'eau, un activateur alcalin (base), respectivement de la soude ou de la potasse caustique. Cette dernière va ensuite réagir avec le composé silico-alumineux (c) particulier de l'invention de sorte à former, de manière surprenante, un liant aux propriétés améliorées. Comme illustré dans les essais expérimentaux ci-dessous, l'association de ces trois composés les fait agir en synergie pour permettre d'améliorer les résistances mécaniques du sol et/ou des granulats traités.

La composition sèche de liant selon l'invention, comprend, en masse, par rapport à la masse totale de ladite composition sèche de liant, de 45 à 95 % dudit composé silico-alumineux, de 2 à 25 % de chaux, de préférence de chaux hydratée et de 3 à 30 % de sel alcalin tel que du carbonate de sodium.

En particulier, la composition sèche de liant selon l'invention, comprend, en masse, par rapport à la masse totale de ladite composition sèche de liant, de 65 à 85 % dudit composé silico-alumineux, de 5 à 20 % de chaux, de préférence de chaux hydratée et de 10 à 25 % de sel alcalin tel que du carbonate de sodium.

En particulier, le diamètre médian de la composition sèche de liant selon l'invention (D₅₀) varie de 1 à 100 µm, de préférence de 5 à 60 µm et idéalement de 5 à 30 µm.

L'invention porte également sur un procédé de préparation d'une composition sèche de liant telle que définie ci-dessus.

Le procédé comprend au moins l'étape suivante : le mélange pendant une durée de 0,1 minute à 15 minutes, de préférence de 0,5 à 10 minutes, et en particulier de 1 à 5 minutes, dans un malaxeur à pulvérulent, de la composition sèche de liant telle que définie ci-dessus, à savoir comprenant au moins :
- activateur alcalino-calcique, comprenant par exemple (a) de la chaux hydratée et (b) un sel alcalin, tel que du carbonate de sodium ou de potassium, et
- (c) un composé silico-alumineux comprenant une teneur en oxyde de calcium supérieure ou égale à 15%, en masse, par rapport à la masse totale dudit composé silico-alumineux.

Le malaxeur convenant pour le procédé peut être du type horizontal, planétaire, à pales ou conique.

Par exemple, la vitesse de malaxage pourra être entre 1 et 220 tr/min, idéalement de 60 tr/min dans le cas d'un malaxeur planétaire.

Ce procédé permet d'obtenir des gâchées régulières.

En outre, l'équipement ainsi que les paramètres de fonctionnement de cet équipement sont ceux classiquement utilisés pour fabriquer des compositions de liants standards et pourront être adaptés par un homme du métier.

Bien sûr, le procédé de préparation selon l'invention peut comprendre toutes les caractéristiques de la composition sèche de liant de géosynthèse telle que décrite ci-dessus.

La composition sèche de liant selon l'invention est en particulier destinée à traiter des sols afin de renforcer leurs propriétés mécaniques.

De préférence, le sol et/ou le granulat comprend une source sulfatée telle que décrite ci-dessus.

Selon l'invention, la composition sèche de liant susmentionnée peut être employée pour le traitement des sols et/ou des granulats en place selon les techniques conventionnelles, à savoir par épandage préalable du liant sur le sol et/ou des granulats avec un procédé de dosage adapté (volumétrique ou pondéral) ou par disposition de sacs de liants sur le sol. L'épandage du liant est suivi du malaxage du sol sur l'épaisseur prévue grâce à un malaxeur mobile prévu à cet effet ou un pulvimixeur. Le dispositif de malaxage mobile permet de maîtriser l'épaisseur du sol traité de façon à maîtriser la composition du mélange. L'ajustement de l'eau de gâchage se fait par mesure préalable de l'eau contenue dans le sol, puis ajout du complément d'eau nécessaire à la prise du liant. Cet ajout d'eau peut se faire avant, pendant ou après le malaxage du liant avec le sol et/ou les granulats. Le matériel d'apport d'eau doit assurer la maîtrise du dosage prévu.

En outre, l'invention porte également sur un matériau ou une structure comprenant un sol ou un granulat ou leur mélange, comprenant éventuellement une source sulfatée, caractérisé en ce qu'il comporte de l'eau et une composition sèche de liant telle que définie ci-dessus.

En général, la composition sèche de liant représente, en masse, par rapport à la masse totale du matériau, de 1 à 30 %, de préférence de 2 à 20 %.

A titre d'exemple, le matériau peut comprendre une fraction de sulfates, sulfures ou autres éléments soufrés dans une proportion de 0,7 à 20 % ou de tout intervalle entre ces valeurs, en masse, par rapport à la masse totale du matériau.

De préférence, le taux de gâchage en eau varie de 1 à 50 % en masse, de préférence de 5 à 25 % en masse. Le taux de gâchage est exprimé par le rapport entre la quantité d'eau et la quantité de matériaux secs en masse.

La teneur en eau sera de préférence déterminée selon l'essai Proctor (NF P 98-231-1) connu de l'homme du métier et utilisé couramment dans le domaine routier. Ainsi, celui-ci saura adapter le taux de gâchage en fonction du sol et/ou des granulats à traiter, ou encore de la composition sèche de liant ou de la maniabilité recherchée.

En particulier, le matériau ou la structure peut être obtenu(e) selon le procédé de préparation suivant comprenant au moins, les étapes suivantes :
i) la préparation d'une composition sèche de liant telle que définie ci-dessus ;
ii) la préparation préalable d'un sol, d'un granulat ou leur mélange, ledit sol, granulat ou leur mélange comportant éventuellement une source de sulfate ;
iii) l'épandage de la composition sèche de liant sur le sol et/ou le granulat de l'étape (ii) ;
iv) le malaxage du sol et/ou du granulat obtenu(s) à l'étape (iii) ;
v) éventuellement, un ajout d'eau de gâchage lors des étapes ii) à iv), soit avant, pendant ou après le malaxage de la composition sèche de liant avec le sol et/ou le granulat (cet ajout est fonction de l'eau contenue et mesurée au préalable dans le sol et/ou le granulat) ;
vi) éventuellement, le réglage et le compactage du matériau ;
vii) et optionnellement la réalisation de la protection ou d'une couche de surface.

En général, le procédé de fabrication du matériau selon l'invention met en oeuvre les techniques et les équipements habituellement utilisés pour les matériaux standards obtenus à partir d'un liant hydraulique et d'un sol et/ou d'un granulat.

L'étape ii) de préparation d'un sol et/ou d'un granulat peut comprendre le défonçage du sol, ainsi que sa remise au profil, voire sa correction granulaire éventuelle par apport par exemple de matériaux nouveaux ou par concassage ou par écrêtage ou par les trois solutions à la fois.

A titre d'exemple, l'étape iv) peut être réalisée par un malaxeur. Un malaxeur convenant pour le procédé peut être mobile sur une machine de traitement en place, à rotors, arbre horizontal ou vertical.

De préférence, la vitesse de malaxage pourra être comprise entre 1 et 220 tr/min, idéalement de 150 tr/min dans le cas d'une machine de traitement en place à arbre horizontal. L'étape (ii) de malaxage du sol ou du granulat peut-être réalisée pendant une durée de 0,1 à 15 minutes, de préférence de 0,5 à 10 minutes et idéalement de 2 minutes.

Un homme du métier saura adapter la vitesse de malaxage et le temps de cette étape en fonction du sol/granulat à traiter ainsi que du matériel à disposition

En général, le taux de gâchage en eau varie de 1 à 50 % en masse, de préférence de 5 à 25 % en masse. Le taux de gâchage est exprimé par le rapport entre la quantité d'eau et la quantité de matériaux secs.

Selon un autre mode de réalisation, le matériau peut être préparé en centrale équipée d'un malaxeur horizontal, conique, à pales, planétaire ou train valseur. En particulier, selon ce mode de réalisation, les étapes (iii) et (iv), voire de (iii) à (v), peuvent être remplacées par une fabrication en centrale, de façon continue ou discontinue avant que le matériau ou la structure obtenu(e) soit mis(e) en oeuvre sur un chantier. Ainsi, les différents constituants du matériau peuvent être mélangés directement dans la centrale avant d'être répandus à l'endroit désiré.

De même, l'étape (iv) d'incorporation du liant peut-être réalisée pendant une durée de 1 seconde à 5 minutes, de préférence de 0,1 à 1 minute et idéalement de 0,5 minute à une vitesse de malaxage entre 50 et 80 tr/min.

Les exemples suivants illustrent l'invention sans la limiter. A moins qu'il ne soit indiqué autrement dans le reste de la description, les pourcentages sont exprimés en masse.

### Exemples

### A) Caractérisation

### ✔ Résistance à la compression simple Rc (NF EN 13286-41)

Une éprouvette contenant un sol traité au liant à tester est soumise à une compression jusqu'à la rupture. L'effort maximal supporté par l'éprouvette est enregistré et la résistance à la compression est calculée.

En particulier, l'essai consiste à solliciter une éprouvette cylindrique de diamètre Ø 5cm et de hauteur h 10cm (5x10) entre deux plateaux perpendiculairement à son axe principal, sur une presse pilotée par ordinateur, avec une vitesse d'application de la force constante de 0,1kN.s⁻¹.

Plus la valeur de Rc est élevée et plus le matériau testé comprenant un liant/ciment présente une bonne résistance mécanique.

### ✔ Résistance à la traction indirecte Rᵢₜ (NF EN 13286-42)

La norme NF EN 13286-42 est utilisée pour déterminer la résistance à la traction indirecte Rit. Il s'agit de mettre en contact le plateau avec l'éprouvette puis d'appliquer une charge de manière continue et uniforme avec une vitesse ne dépassant pas 0,2 MPa/s.

Plus la valeur de Rᵢₜ est élevée et plus le matériau testé comprenant un liant/ciment présente une bonne résistance mécanique.

### ✔ Détermination du module d'élasticité E (NF EN 13286-43)

La norme NF EN 13286-43 décrit la méthode à suivre pour mesurer E. Le module d'élasticité donne des informations sur le comportement du matériau testé soumis à des contraintes et caractérise la rigidité du matériau.

Plus le module d'élasticité est élevé et moins le matériau se déforme sous la contrainte et par conséquent, plus il est rigide.

### ✔ Détermination des références de compactage d'un matériau NF P 94-093 (courbe de Proctor)

Cet essai permet de déterminer la quantité d'eau à introduire dans un mélange en technique routière. Il a été utilisé pour chaque essai illustré dans la demande. Le principe de cet essai consiste à humidifier un matériau à plusieurs teneurs en eau et à compacter, pour chacune des teneurs en eau, selon un procédé et une énergie normalisés.

Pour chacune des valeurs de teneur en eau considérée, on détermine la masse volumique sèche du matériau et on trace la courbe des variations de cette masse volumique en fonction de la teneur en eau.

D'une manière générale cette courbe, appelée courbe Proctor, présente une valeur maximale de la masse volumique du matériau sec qui est obtenue pour une valeur particulière de la teneur en eau.

### B) Préparation de deux compositions de liant

Deux compositions de liant selon l'invention (Liant 1 et Liant 2) ont été fabriquées à partir de carbonate de sodium anhydre, de chaux hydratée (ou éteinte) Ca(OH)₂, d'un laitier moulu de haut fourneau.

En particulier, la chaux hydratée présente la formule chimique Ca(OH)₂ et la composition suivante :

| | |
|---|---|
| (CaO + MgO) total | ≥ 90 % |
| Ca(OH)₂ teneur en chaux éteinte | ≥ 90 % |
| CO₂ | ≤ 4 % |
| MgO | ≤ 4 % |
| S | ≤ 0,8 % |
| H₂O | ≤ 2 %. |

La chaux présente en outre les caractéristiques physiques suivantes :
Granulométrie : passant au tamis de 200 µm ≥ 98 % passant au tamis de 90 µm≥ 93 %
Pénétration : > 10 mm et < 50 mm
Densité apparente : 0,30/0,45
Surface spécifique Blaine : 15 000 à 20 000 cm²/g.

Le carbonate de sodium Na₂CO₃ utilisé présente un taux de pureté > 97 % et une masse volumique de 2,53 réelle Mg/m³ et un diamètre médian indicatif (d50) de 60 µm (plus de 95 % du carbonate de sodium passe à travers un tamis de 200 µm).

Le laitier de haut fourneau moulu présente notamment la composition illustrée dans les tableaux 1 et 2 ci-dessous :

**Tableau 1**

| **Composé** | **Pourcentage en masse** |
|---|---|
| CaO | 43,4 |
| SiO₂ | 37,1 |
| Al₂O₃ | 10,8 |
| MgO | 6,7 |
| Fe₂O₃ | 0,6 |
| TiO₂ | 0,5 |
| SO₃ | 0,1 |
| S²⁻ | 0,9 |
| Na2O | 0,34 |
| K₂O | 0,24 |
| Na20 eq. | 0,46 |
| Cl⁻ | 0,01 |

**Tableau 2**

| | |
|---|---|
| Silice réactive (%) selon NF EN 197-1 | 36,3 |
| Alumine réactive (%) Méthode GEOS | 10,2 |
| CEC (cmol(+)/kg} | 10,0 |

Le laitier de haut fourneau moulu présente une surface spécifique Blaine, mesurée selon la norme NF EN 196-6 de 4450 ± 300 cm²/g, une masse volumique réelle de 2,90 ±0,03 g/cm³ et un diamètre médian indicatif (d₅₀) de 12 µm (plus de 95% du laitier passe à travers un tamis de 32 µm).

La composition sèche de liant 1 selon l'invention présente la formulation décrite dans le tableau 3 ci-dessous:

**Tableau 3**

| | **Liant 1** (% en masse) |
|---|---|
| Laitier moulu | 74,6 |
| Carbonate de sodium | 14,7 |
| Chaux hydratée | 10,7 |

Le Liant 1 se présente sous forme de poudre blanche et possède une masse volumique de 2,82 Mg/m³ et une granulométrie 0/2mm avec 1 µm ≤ D50 (%) ≤ 100 µm (plus de 80% du Liant 1 passe à travers un tamis de 50 µm et plus de 60% du Liant 1 passe à travers un tamis de 20 µm).

Le Liant 2 selon l'invention comprend en outre un additif sulfatique sous forme de plâtre ou gypse afin d'améliorer la prise et la tenue à l'eau du liant selon l'invention.

Ainsi le Liant 2 présente la formulation suivante (tableau 4) :

**Tableau 4**

| | **Liant 2** (% en masse) |
|---|---|
| Laitier moulu | 62,2 |
| Carbonate de sodium | 12,3 |
| Chaux hydratée | 8,9 |
| (additif sulfatique) | 16,7 |

Le Liant 1 et le Liant 2 ont été préparés par mélange des différents constituants dans un mélangeur à pulvérulent de type malaxeur horizontal à pales présentant une vitesse de malaxage de 60 tr/min pendant une durée de 3 minutes.

### C) Essais

Pour les essais ci-dessous, le **Liant 1** décrit ci-dessus a été utilisé.

### C.1 : Stockabilité

Un essai de stockabilité a été mené afin d'apprécier la durée de vie du liant selon l'invention. Pour cet essai, 94,4 % en masse d'un sol fin légèrement argileux de type A1 (limon typique présent en région parisienne présentant une valeur au bleu VBS égale à 1,5 et 75 % en masse d'éléments passants au tamis de 80 microns) selon le Guide de la Technique Routière (GTR) a été mélangé avec 5,6 % en masse du Liant 1 selon l'invention (les pourcentages sont indiqués par rapport à la masse totale du sol A1 + du Liant 1).

Le mélange testé a été préparé :
- par malaxage dans un malaxeur à pales pour sol de type « cutter » pendant 30 secondes à une vitesse de 24 tr/min pour le bol et 3000 tr/min pour les pales afin d'homogénéiser le sol A1,
- puis incorporation du Liant 1 et malaxage de l'ensemble sol + Liant 1 pendant 30 secondes à une vitesse de 24 tr/min pour le bol et 3000 tr/min pour les pales, et
- malaxage après ajout d'eau (taux de gâchage de 15 % déterminé par l'essai Proctor) pendant 2 min à 24 tr/min pour le bol et 3000 tr/min pour les pales.

Les résultats de résistances en compression sont les suivants :

**Tableau 5**

| | Rc (MPa) | |
|---|---|---|
| | 24 heures | 7 jours |
| Moulage immédiat après fabrication du Liant 1 | 1,8 | 2,7 |
| Moulage avec Liant 1 ayant vieilli 1 mois dans un seau étanche | 1,3 | 2,3 |
| Moulage avec Liant 1 ayant vieilli 7 mois dans un seau étanche | 1,7 | 2,5 |

Par conséquent, le liant 1 selon l'invention présente une bonne durée de vie lors de son stockage.

### C.2 : Influence du type d'apport silico-alumineux

Différentes sources silico-alumineuses ont été étudiées à titre comparative (argile, kaolin, cendre volante) afin de démontrer la spécificité de la source alumineuse selon l'invention, à savoir dans cet exemple le laitier de haut fourneau (HF) moulu décrit ci-dessus.

Les formulations testées (pourcentage en masse) sont les suivantes (tableau 6) :

**Tableau 6**

| | Laitier HF | Argile | Kaolin | Cendre volante | Carbonate de sodium | Chaux hydratée |
|---|---|---|---|---|---|---|
| **F1** | 74,6 | - | - | - | 14,7 | 10,7 |
| F2 | - | 74,6 | - | - | | |
| F3 | - | - | 74,6 | - | | |
| F4 | - | - | - | 74,6 | | |

Le taux de gâchage pour cet essai est déterminé par l'essai Proctor NF P94-093 et est de 9,9 à 14 % pour les formulations F1 à F4.

Le matériau traité est un sable calcaire 0/4 mm. Il provient de la carrière SMBP situé à Berchère les Pierre (28) et correspond à un calcaire de Beauce. Pour cet essai, 83% en masse de sable calcaire 0/4 mm ont été mélangés avec 17% en masse du Liant 1 selon l'invention (les pourcentages sont indiqués par rapport à la masse totale du sable calcaire + du Liant 1).

Le mélange testé a été préparé :
- par malaxage du sable naturel dans un malaxeur planétaire pendant 30 secondes à une vitesse de 60 tr/min,
- puis malaxage toujours à une vitesse de 60 tr/min pendant 5 min d'une première fraction d'eau afin de saturer le sable calcaire en eau,
- incorporation du Liant 1 et malaxage de l'ensemble sable + Liant 1 pendant 30 secondes à une vitesse de 60 tr/min, et
- malaxage après ajout d'une seconde fraction d'eau de sorte que le taux de gâchage soit de 9,9 à 14 % selon les formules (déterminé par l'essai Proctor) pendant 2 min à 60 tr/min.

Pour chaque formulation ci-dessus, un essai de compression Rc selon la norme NF EN 13286-41 a été réalisé au bout de 24 heures et au bout de 7 jours.

Le résultat est le suivant :

**Tableau 7**

| | Rc 24 h (MPa) | Rc 7 jours (MPa) | Variation en % par rapport à F1 | |
|---|---|---|---|---|
| | | | 24h | 7 jrs |
| **F1** | **13** | **18** | - | - |
| F2 | 1,4 | 2,7 | -89,23 | -85,00 |
| F3 | 0,7 | 1,9 | -94,62 | -89,44 |
| F4 | 1,3 | 3,1 | -90,00 | -82,78 |

Ainsi, la formulation selon l'invention F1 présente une résistance à la compression qui est bien supérieure à celle obtenue avec d'autres sources de composés silico-alumineux. On observe une amélioration de plus de 85% minium que ce soit au bout de 24 heures ou au bout de 7 jours.

Le liant selon l'invention présente ainsi une très bonne résistance mécanique.

### C.3 : Influence des composants du liant selon l'invention

Le but de cet essai est de déterminer les performances mécaniques (Rc) du liant selon l'invention en retirant un à un chacun des composants afin d'évaluer leur influence.

Le matériau traité est le sable calcaire 0/4mm défini précédemment. Le dosage en liant selon l'invention (Liant 1) et des liants comparatifs est de 17% en masse par rapport à la masse totale du sable + liant. Le procédé de préparation du sable est le même que pour l'essai précédent (C.2).

Les formulations de liants testées (pourcentage en masse) et les résultats de Rc sont illustrés dans le tableau 8 ci-dessous :

**Tableau 8**

| | Liant testé avec le sable calcaire 0/4 | | | Résultat Rc | |
|---|---|---|---|---|---|
| | Laitier HF | Chaux hydratée | Carbonate de sodium | Rc 24 h (MPa) | Rc 7 jours (MPa) |
| **F1** | 74,6 | 10,7 | 14,7 | **13** | **18** |
| F5 | 74,6 | 25,4 | - | 4,7 | 7 |
| F6 | 74,6 | - | 25,4 | 2,6 | 17 |
| F7 | 100 | - | - | 0,7 | 1,3 |

Le taux de gâchage pour cet essai est déterminé par l'essai Proctor NF P94-093 et est de 10,2 % pour les formulations F5 à F7.

Par conséquent, cet essai démontre que l'association des trois composants de l'invention, à savoir le silico-alumineux (laitier HF), la chaux hydratée et le carbonate de sodium permet d'obtenir d'excellentes résistances mécaniques à la fois au bout de 24 heures et de 7 jours, ce qui n'est pas le cas lorsque l'on n'utilise pas cette association. En outre, ces composés agissent en synergie puisque le résultat en compression pour la formulation F1 est nettement supérieur à la somme des résultats en compression obtenus avec les formulations F5 et F6 à 24 heures.

### C.4 : Variations des dosages des composants du liant selon l'invention

Tout comme pour l'essai C.3, cet essai a été réalisé sur le sable calcaire 0/4mm défini ci-dessus. Le dosage en liant selon l'invention (Liant 1 - F1) et des liants comparatifs est de 17 % en masse par rapport à la masse totale du sable + liant. Le procédé de préparation du sable est le même que pour l'essai précédent (C.2).

La proportion entre chaux hydratée et carbonate de sodium a été maintenue constante : 58 %, en masse, de carbonate de sodium et 42 %, en masse, de chaux hydratée, par rapport à la masse totale de carbonate de sodium + chaux hydratée.

Les formulations testées selon l'invention F1, F8 et F9, ainsi que les résultats de résistance en compression sont illustrés dans le tableau 9 ci-dessous :

**Tableau 9**

| | Liant testé avec le sable calcaire 0/4 | | | Résultat Rc | |
|---|---|---|---|---|---|
| | Laitier HF | Chaux hydratée | Carbonate de sodium | Rc 24 h (MPa) | Rc 7 jours (MPa) |
| **F1** | 74,6 | 10,7 | 14,7 | 13 | 18 |
| **F8** | 50,0 | 21,0 | 29,0 | 6 | 7,5 |
| **F9** | 90,0 | 4,2 | 5,8 | 9 | 16 |

Le taux de gâchage en eau pour cet essai est déterminé par l'essai Proctor NF P94-093 et est de 10 % pour les formulations F8 à F9.

Par conséquent, une teneur en laitier HF selon l'invention entre 50 et 90 %, en masse, par rapport à la masse totale du liant, donnent des résistances en compression satisfaisantes, notamment lorsque la teneur en laitier est de 75 % en masse et ce lorsque l'activateur alcalin comporte, en masse, 58 % de carbonate de sodium et 42 % de chaud hydratée et que le liant est dosé à 17 %, en masse, dans le sable 0/4mm à traiter par rapport à la masse totale liant + sable.

### C.5 : Evolution des résistances en compression simple Rc, à la résistance indirecte Rᵢₜ et module d'élasticité

Pour cet essai, différents dosages de **Liant 2** selon l'invention ont été testés, à savoir 5% en masse et 8% en masse sur un sol sableux et graveleux avec fines, très peu argileux de type B5 (GTR NF P 11-300) par rapport à la masse totale de liant + sol.

Le procédé de préparation du mélange sol + liant 2 est le même que celui décrit au point C.1, à savoir :
- on malaxe dans un malaxeur planétaire pendant 30 secondes à une vitesse de 60 tr/min afin d'homogénéiser le sol B5,
- on incorpore le Liant 2 et on malaxe l'ensemble sol B5 + Liant 1 pendant 30 secondes à une vitesse de 60 tr/min, et
- on ajoute l'eau, puis on malaxe de nouveau (taux de gâchage de 14 à 15,5% pendant 2 min à tr/min.

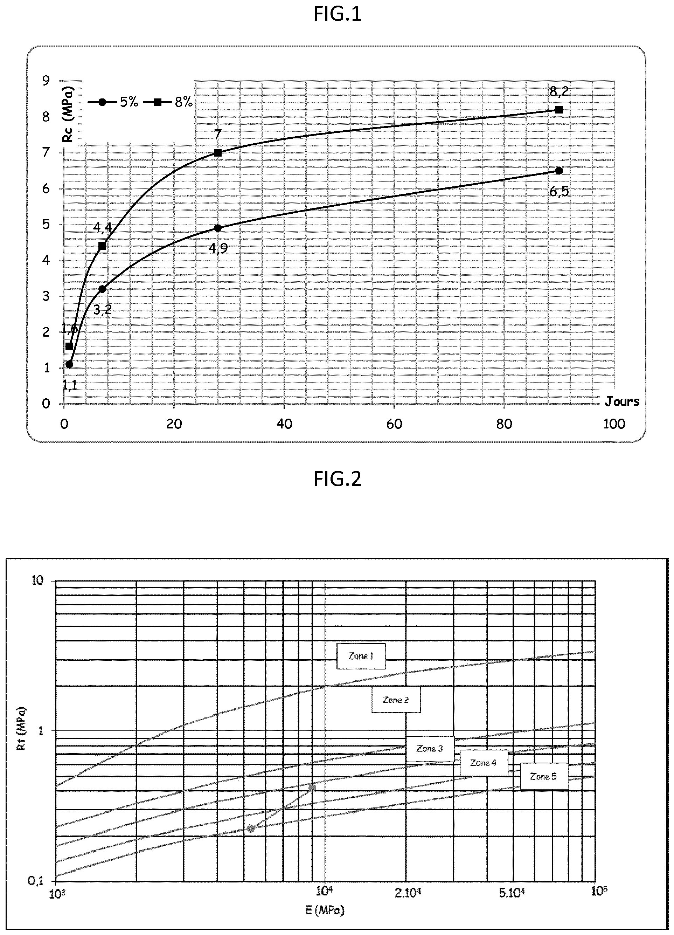

Les résultats de résistance en compression Rc, de résistance en compression indirecte Rᵢₜ (appelée également résistance en compression diamétrale) et le module d'élasticité sont présentés en figures 1 et 2.

En se référant à ces figures, on remarque que les résistances en compression Rc et Rᵢₜ sont tout à fait satisfaisantes, tout comme le module d'élasticité.

### C.6 : Efficacité du liant dans un sol contenant des sulfates (les pourcentages sont donnés en masse par rapport à la masse totale des constituants)

Pour cet essai, on a traité un sol fin de type limon faiblement argileux classé A1 selon NF P 11-300. Ce type de sol s'il ne contient pas de sulfate peut être traité selon les règles de l'art en incorporant, premièrement, 1 % de chaux vive, puis ensuite 6 % de ciment normalisé de type CEM I.

Le même type de sol s'il contient des sulfates de calcium notamment peut être affecté de gonflements préjudiciables à son emploi.

C'est ce qui a été vérifié expérimentalement en traitant le sol A1 pur par ajout de 1 % de chaux vive et 6 % de ciment CEM I. Puis, on a ajouté à ce sol A1 traité avec de la chaux vive et du ciment CEM I, 3 % de plâtre dont le composé principal est du sulfate de calcium semi hydraté (CaSO₄(H₂O)_{1/2}) afin d'obtenir un sol sulfaté.

Des éprouvettes cylindriques de dimension 5x5 cm ont été moulées pour les deux mélanges. Les éprouvettes ont ensuite été conservées dans de l'eau à 40°C pendant 7 jours, frettées dans des anneaux métalliques pour les éprouvettes destinées à la mesure de la résistance en traction indirecte et dans des filets plastiques pour les éprouvettes destinées à la mesure du gonflement.

Pour le sol naturel sans sulfates après 3 jours de conservation, les résultats sont les suivants :
- Rit = 0,78 MPa, gonflement volumique Gv = 0,2 % : la résistance est excellente (seuil d'acceptabilité : ≥ 0,2 MPa) et le gonflement très faible (seuil d'acceptabilité : ≤ 5 %)
   Pour le sol additionné de 3 % de plâtre, les résultats sont les suivants.
- Rit = 0,60 MPa, gonflement volumique Gv = 12,5%: bien que la résistance reste excellente (seuil d'acceptabilité : ≥ 0,2 MPa), le gonflement très important empêche tout emploi pratique d'un tel traitement.

A titre comparatif, l'essai sur le sol sulfaté (à savoir le sol additionné de 3% de plâtre) a également été réalisé avec le liant 1 selon l'invention à deux taux : 8 % et 11 %, en masse, par rapport à la masse totale liant 1 + sol + plâtre. Pour cet essai le liant 1 de l'invention ne contenait pas d'additif sulfaté (d).

On constate que le gonflement volumique Gv observé est de 2,3 % pour une teneur de 8% en liant 1 et de 4,9 % pour une teneur de 11 % en liant 1. Ces valeurs sont inférieures au seuil de tolérance et permettent donc d'envisager un emploi sur chantier.

Les résistances en traction indirecte Rit sont respectivement de 0,75 et 0,82 MPa. La composition sèche de liant de l'invention permet donc de traiter ce type de sol sulfaté industriellement.

Par ailleurs, on a également traité le sol naturel sans sulfate avec le liant 1 de l'invention aux taux de 8% et 11 %. Cependant dans les deux cas, le liant 1 n'a pas fait prise et les mesures n'ont pas pu être réalisées. Ceci montre que pour certains types de matériaux, notamment ceux qui sont assez fins et qui contiennent une fraction argileuse, même en faible quantité, la présence de sulfates dans le mélange assure une prise minimale et l'obtention de performances mécaniques satisfaisantes.

## Revendications

1. Composition sèche de liant de géosynthèse comprenant au moins :
- un activateur alcalino-calcique comportant au moins de la chaux et un sel alcalin qui sont aptes à réagir ensemble pour former *in situ* une base en présence d'eau, et
- un composé silico-alumineux, comprenant une teneur en oxyde de calcium supérieure ou égale à 15 %, en masse, par rapport à la masse totale dudit composé silico-alumineux,
**caractérisée en ce que** la composition sèche de liant comprend, en masse, par rapport à sa masse totale, de 45 à 95 % dudit composé silico-alumineux, de 2 à 25 % de chaux et de 3 à 30 % de sel alcalin.

2. Composition sèche de liant de géosynthèse selon la revendication 1, dans laquelle ledit composé silico-alumineux comprend une teneur en oxyde de calcium supérieure ou égale à 25 %, en masse, par rapport à la masse totale dudit composé silico-alumineux.

3. Composition sèche de liant de géosynthèse selon la revendication 1 ou la revendication 2, dans laquelle ledit composé silico-alumineux comprend, en masse, par rapport à sa masse totale, au moins : de 25 à 55 % d'oxyde de calcium (CaO), de 3 à 25 % d'alumine (Al₂O₃) et de 20 à 50 % de SiO₂.

4. Composition sèche de liant de géosynthèse selon l'une quelconque des revendications précédentes, dans laquelle ledit composé silico-alumineux comprend, en masse, par rapport à sa masse totale, au moins : de 35 à 45 % d'oxyde de calcium (CaO), de 5 à 15% d'alumine (Al₂O₃) et de 30 à 45 % de SiO₂.

5. Composition sèche de liant de géosynthèse selon l'une quelconque des revendications précédentes, dans laquelle le ratio molaire Si/Al dudit composé silico-alumineux varie de 0,1 à 6, de préférence de 1 à 4.

6. Composition sèche de liant de géosynthèse selon la revendication précédente, comprenant, en masse, par rapport à la masse totale de ladite composition sèche de liant, de 65 à 85 % dudit composé silico-alumineux, de 5 à 20 % de chaux hydratée et de 10 à 25 % de sel alcalin.

7. Composition sèche de liant de géosynthèse selon l'une quelconque des revendications précédentes, dans laquelle le sel alcalin est du carbonate de potassium, du carbonate de sodium, du silicate de potassium, du silicate de sodium ou un de leurs mélanges.

8. Composition sèche de liant de géosynthèse selon l'une quelconque des revendications précédentes, comprenant une source de sulfates.

9. Matériau comprenant un sol, un granulat ou leur mélange, **caractérisé en ce qu'**il comprend de l'eau et une composition sèche de liant de géosynthèse selon l'une des revendications 1 à 8.

10. Matériau selon la revendication 9, dans lequel la composition sèche de liant représente, en masse, par rapport à la masse totale dudit matériau, de 1 à 30 %, de préférence de 2 à 20 %.

11. Matériau selon l'une quelconque des revendications 9 et 10, dans lequel est présente une fraction de sulfates, sulfures ou autres éléments soufrés dans une proportion de 0,7 à 20%, en masse, par rapport à la masse totale du matériau.

12. Procédé de préparation d'une composition sèche de liant de géosynthèse selon l'une des revendications 1 à 8, comprenant au moins l'étape suivante : le mélange pendant une durée de 0,5 minutes à 15 minutes, dans un malaxeur à pulvérulent, d'un activateur alcalino-calcique comportant de la chaux et un sel alcalin, avec un composé silico-alumineux comprenant une teneur en oxyde de calcium supérieure ou égale à 15 %, en masse, par rapport à la masse totale dudit composé silico-alumineux, **caractérisée en ce que** la composition sèche de liant comprend, en masse, par rapport à sa masse totale, de 45 à 95 % dudit composé silico-alumineux, de 2 à 25 % de chaux et de 3 à 30 % de sel alcalin.

13. Procédé de préparation d'un matériau selon l'une des revendications 9 à 11 comprenant une composition sèche de liant de géosynthèse préparée selon le procédé défini à la revendication 12, comprenant au moins les étapes suivantes :
i) la préparation de la composition sèche de liant selon la revendication 12 ;
ii) la préparation d'un sol, d'un granulat ou leur mélange comportant éventuellement une source de sulfates ;
iii) l'épandage de ladite composition sèche de liant sur le sol et/ou le granulat préalablement répandu lors de l'étape (ii) ;
iv) le malaxage du sol et/ou du granulat obtenu(s) à l'issue de l'étape (iii) ;
v) éventuellement, un ajout d'eau de gâchage lors des étapes ii) à iv) : avant, pendant ou après le malaxage de la composition sèche de liant avec le sol et/ou le granulat, de sorte à obtenir ledit matériau.

14. Procédé de préparation d'un matériau selon la revendication 13, caractérisé en ce les étapes (iii) et (iv) sont remplacées par une fabrication en centrale, de façon continue ou discontinue, avant que ledit matériau soit mis en oeuvre sur un chantier.

## Patentansprüche

1. Trockene Zusammensetzung eines Geosynthese-Bindemittels, umfassend mindestens:
- einen Alkali-Kalk-Aktivator, umfassend mindestens Kalk und ein Alkalisalz, die geeignet sind, gemeinsam zu reagieren, um in situ eine Base im Beisein von Wasser zu bilden, und
- eine Silizium-Aluminium-Verbindung, umfassend einen Gehalt an Kalziumoxid größer oder gleich 15 Massen-% bezogen auf die Gesamtmasse der Silizium-Aluminium-Verbindung,
**dadurch gekennzeichnet, dass** die trockene Bindemittelzusammensetzung in Masse bezogen auf ihre Gesamtmasse 45 bis 95 % der Silizium-Aluminium-Verbindung, 2 bis 25 % Kalk und 3 bis 30 % Alkalisalz umfasst.

2. Trockene Zusammensetzung eines Geosynthese-Bindemittels nach Anspruch 1, bei der die Silizium-Aluminium-Verbindung einen Gehalt an Kalziumoxid größer oder gleich 25 Massen-% bezogen auf die Gesamtmasse der Silizium-Aluminium-Verbindung umfasst.

3. Trockene Zusammensetzung eines Geosynthese-Bindemittels nach Anspruch 1 oder Anspruch 2, bei der die Silizium-Aluminium-Verbindung in Masse bezogen auf ihre Gesamtmasse mindestens umfasst: 25 bis 55 % Kalziumoxid (CaO), 3 bis 25 % Aluminiumoxid (Al₂O₃) und 20 bis 50 % SiO₂.

4. Trockene Zusammensetzung eines Geosynthese-Bindemittels nach einem der vorhergehenden Ansprüche, bei der die Silizium-Aluminium-Verbindung in Masse bezogen auf ihre Gesamtmasse mindestens umfasst: 35 bi 45 % Kalziumoxid (CaO), 5 bis 15 % Aluminiumoxid (Al₂O₃) und 30 bis 45 % SiO₂.

5. Trockene Zusammensetzung eines Geosynthese-Bindemittels nach einem der vorhergehenden Ansprüche, bei der das Molverhältnis Si/Al der Silizium-Aluminium-Verbindung von 0,1 bis 6, vorzugsweise von 1 bis 4, variiert.

6. Trockene Zusammensetzung eines Geosynthese-Bindemittels nach dem vorhergehenden Anspruch, umfassend in Masse bezogen auf die Gesamtmasse der trockenen Bindemittelzusammensetzung 65 bis 85 % der Silizium-Aluminium-Verbindung, 5 bis 20 % Löschkalk und 10 bis 25 % Alkalisalz.

7. Trockene Zusammensetzung eines Geosynthese-Bindemittels nach einem der vorhergehenden Ansprüche, bei der das Alkalisalz Kaliumkarbonat, Natriumkarbonat, Kaliumsilikat, Natriumsilikat oder eines ihrer Gemische ist.

8. Trockene Zusammensetzung eines Geosynthese-Bindemittels nach einem der vorhergehenden Ansprüche, umfassend eine Sulfatquelle.

9. Material, umfassend ein Sol, ein Granulat oder ihr Gemisch, **dadurch gekennzeichnet, dass** es Wasser und eine trockene Zusammensetzung eines Geosynthese-Bindemittels nach einem der Ansprüche 1 bis 8 umfasst.

10. Material nach Anspruch 9, bei dem die trockene Bindemittelzusammensetzung in Masse bezogen auf die Gesamtmasse des Materials 1 bis 30 %, vorzugsweise 2 bis 20 %, darstellt.

11. Material nach einem der Ansprüche 9 und 10, in dem eine Fraktion von Sulfaten, Sulfiden oder anderen schwefelhaltigen Elementen in einem Verhältnis von 0,7 bis 20 Massen-% bezogen auf die Gesamtmasse des Materials vorhanden ist.

12. Verfahren zur Herstellung einer trockenen Zusammensetzung eines Geosynthese-Bindemittels nach einem der Ansprüche 1 bis 8, umfassend mindestens den folgenden Schritt: Mischen während einer Dauer von 0,5 Minuten bis 15 Minuten in einem Pulvermischer eines Alkali-Kalk-Aktivators, umfassend Kalk und ein Alkalisalz, mit einer Silizium-Aluminium-Verbindung, umfassend einen Gehalt an Kalziumoxid größer oder gleich 15 Massen-% bezogen auf die Gesamtmasse der der Silizium-Aluminium-Verbindung, **dadurch gekennzeichnet, dass** die trockene Bindemittelzusammensetzung in Masse bezogen auf ihre Gesamtmasse 45 bis 95 % der Silizium-Aluminium-Verbindung, 2 bis 25 % Kalk und 3 bis 30 % Alkalisalz umfasst.

13. Verfahren zur Herstellung eines Materials nach einem der Ansprüche 9 bis 11, umfassend eine trockene Zusammensetzung eines Geosynthese-Bindemittels, das nach dem in Anspruch 12 definierten Verfahren hergestellt wird, umfassend mindestens die folgenden Schritte:
i) Herstellung der trockenen Bindemittelzusammensetzung nach Anspruch 12;
ii) Herstellung eines Sols, eines Granulats oder ihres Gemisches, umfassend eventuell eine Sulfatquelle;
iii) Verteilen der trockenen Bindemittelzusammensetzung auf dem Sol und/oder dem Granulat, das vorher in Schritt (ii) ausgebreitet wurde;
iv) Mischen des Sols und/oder des Granulats, die in Schritt (iii) erhalten wurden;
v) eventuell Hinzufügen von Anmachwasser bei den Schritten ii) bis iv): vor, während oder nach dem Mischen der trockenen Bindemittelzusammensetzung mit dem Sol und/oder dem Granulat, um das Material zu erhalten.

14. Verfahren zur Herstellung eines Materials nach Anspruch 13, **dadurch gekennzeichnet, dass** die Schritte (iii) und (iv) durch eine kontinuierliche oder diskontinuierliche Herstellung im Werk, bevor das Material auf einer Baustelle eingesetzt wird, ersetzt werden.

## Claims

1. A geosynthetic binder dry composition comprising at least:
- an alkalino-calcium type activator comprising at least lime and an alkaline salt, which is adapted to react together so as to form *in situ* a base in the presence of water, and
- a silico-aluminous compound, comprising an amount of calcium oxide higher than or equal to 15%, by weight, as compared to the silico-aluminous compound total weight,
**characterized in that** the binder dry composition comprises, by weight, as compared to its total weight, from 45 to 95% of said silico-aluminous compound, from 2 to 25% of lime and from 3 to 30% of an alkaline salt.

2. The dry geosynthetic binder composition according to claim 1, wherein said silico-aluminous compound comprises an amount of calcium oxide higher than or equal to 25% by weight, as compared to the silico-aluminous compound total weight.

3. The dry geosynthetic binder composition according to claim 1 or claim 2, wherein said silico-aluminous compound comprises, by weight, as compared to the total weight, at least from 25 to 55% of calcium oxide (CaO), from 3 to 25% of alumina (Al₂O₃) and from 20 to 50% of SiO₂.

4. The dry geosynthetic binder composition according to anyone of the preceding claims, wherein said silico-aluminous compound comprises, by weight, as compared to its total weight, at least from 35 to 45% of calcium oxide (CaO), from 5 to 15% of alumina (Al₂O₃) and from 30 to 45% of SiO₂.

5. The dry geosynthetic binder composition according to anyone of the preceding claims, wherein the Si/AI molar ratio of said silico-aluminous compound varies from 0.1 to 6, preferably from 1 to 4.

6. The dry geosynthetic binder composition according to anyone of the preceding claims, comprising, by weight, as compared to the dry binder composition total weight, from 65 to 85% of said silico-aluminous compound, from 5 to 20% of hydrated lime and from 10 to 25% of an alkaline salt.

7. The dry geosynthetic binder composition according to anyone of the preceding claims, wherein said alkaline salt is potassium carbonate, sodium carbonate, potassium silicate, sodium silicate or any combination thereof.

8. The dry geosynthetic binder composition according to anyone of the preceding claims, comprising a sulfate source.

9. A material comprising a soil, an aggregate or the mixture thereof, **characterized in that** it comprises water and a geosynthetic binder dry composition according to anyone of the preceding claims 1 to 8.

10. The material according to claim 9, wherein the binder dry composition represents, by weight, as compared to said material total weight, from 1 to 30%, preferably from 2 to 20%.

11. The material according to claim 9 or claim 10, wherein a fraction of sulfates, sulfides or other sulfur-type elements is present, in an amount ranging from 0.7 to 20% by weight, as compared to the material total weight.

12. A method for producing a geosynthetic binder dry composition according to anyone of the preceding claims 1 to 8, comprising at least the following step: mixing for a time period ranging from 0.5 minutes to 15 minutes, in a powder mixer, of an alkalino-calcium type activator comprising lime and an alkaline salt, with a silico-aluminous compound comprising an amount of calcium oxide higher than or equal to 15%, by weight, as compared to the silico-aluminous compound total weight, **characterized in that** the binder dry composition comprises, by weight, as compared to its total weight, from 45 to 95% of said silico-aluminous compound, from 2 to 25% of lime and from 3 to 30% of an alkaline salt.

13. A method for producing a material according to anyone of the preceding claims 9 to 11 comprising a geosynthetic binder dry composition prepared according to the method defined in claim 12, comprising at least the following steps:
i) preparing the binder dry composition according to claim 12;
ii) preparing a soil, an aggregate or the mixture thereof optionally containing a sulfate source;
iii) spreading said dry binder composition onto the soil and/or the aggregate beforehand overlaid during step (ii);
iv) mixing the soil and/or the aggregate obtained at the end of step (iii);
v) optionally, adding mixing water during steps ii) to iv) before, during or after the mix-in place of the binder dry composition with the soil and/or the aggregate, so as to obtain said material.

14. The method for producing a material according to claim 13, **characterized in that** these steps (iii) and (iv) are replaced with a process in a central plant, continuously or discontinuously, prior to using said material on a work site.
